# EUROPEAN PATENT SPECIFICATION

(11) **EP 4 012 331 B1**
(45) Date of publication and mention of the grant of the patent: **07.08.2024**
(21) Application number: 21215559.2
(22) Date of filing: 29.05.2014
(51) Int. Cl.: G01B 15/04, G01N 23/04

(54) **METHOD AND APPARATUS OF MEASURING OBJECTS USING SELECTIVE IMAGING**
VERFAHREN UND VORRICHTUNG ZUR MESSUNG VON OBJEKTEN MITTELS SELEKTIVER BILDGEBUNG
PROCÉDÉ ET APPAREIL DE MESURE D'OBJETS UTILISANT UNE IMAGERIE SÉLECTIVE

(30) Priority: 17.06.2013 US 201361835952 P
(43) Date of publication of application: 15.06.2022
(62) Divisional of application: 14735006.0
(73) Proprietor: Hexagon Metrology, Inc, North Kingstown, Rhode Island 02852 (US)
(72) Inventor: O'HARE, Jonathan J., Warwick, Rhode Island, 02818 (US); DARROUZET, Stephen, Salt Lake City, Utah, 84121 (US)
(74) Representative: Kaminski Harmann

(56) References cited:
- EP-A1- 2 207 028
- WO-A1-02/46729
- JP-A- 2007 101 392
- US-B2- 8 422 624

## Description

### PRIORITY

This patent application claims priority from United States patent application number 14/290,100, filed May 29, 2014, and from provisional application number 61/835,952, filed June 17, 2013, both of which are entitled, "METHOD AND APPARATUS OF MEASURING OBJECTS USING SELECTIVE IMAGING," and name Jonathan O'Hare and Stephen Darrouzet as inventors.

### FIELD OF THE INVENTION

The invention generally relates to metrology and, more particularly, the invention relates to metrology using imaging devices.

### BACKGROUND OF THE INVENTION

Coordinate measuring machines (CMMs) are widely used for the geometric inspection and measurement of manufactured objects having a multitude of features. These features are often dispersed throughout the object at different locations and in different orientations. To improve industrial processes using CMMs, many such machines should quickly direct a measurement sensor toward relevant features in a manner that minimizes the measurement cycle time. This has been especially true of tactile probing systems where a single point stylus must make many moves to collect sufficient data about each feature of an object. In some applications, this tactile inspection method is too slow. The art has responded to this problem by developing more advanced probing systems, such as laser point or line scanners, which collect more data with a smaller range of motion.

Computed tomography inspection systems also have been used for inspection and measurement. Undesirably, such systems known to the inventors require the acquisition of an object's entire volume. Accordingly, industrial computed tomography systems scan the entire object volume through a complete rotation of 360 degrees with a plurality of either 2D x-ray projection images (cone beam/flat panel scanners) or 1D X-ray scan lines (helical/line scanners). Software later reconstructs these images into planar slices or complete volumes for analysis.

One problem with this scanning approach is that it often collects a high volume of information. This high volume of data then must be processed, which takes a long time (e.g., 30-45 minutes, which is unacceptably long for many industrial inspection systems), and takes up extra space for data storage. Use of the prior art computed tomography approach for geometric inspection therefore often is quite impractical. Examples of systems adapted to scan only a selected region of interest of the object can be found in the documents JP 2007 101392 A, WO 02/46729 A1 and EP 2 207 028 A1.

### SUMMARY OF THE INVENTION

The invention is defined in the appended claims. In accordance with one embodiment of the invention, a method of measuring an object, the method being defined in claim 1, registers the object with a model of the object, and determines at least one feature of the object to scan. Next, the method controls an X-ray scanning device to scan less than the entirety of the object to produce visual data representing at least one scanned portion. The at least one scanned portion has the at least one feature, while the X-ray scanning device is controlled as a function of registering the object and model.

The method further reconstructs the at least one scanned portion of the object from the visual data to produce a reconstruction. Next, the method measures the at least one feature from the reconstruction. Sometimes, the method may determining a plurality of features of the object to scan, and control the X-ray scanning device to scan less than the entirety of the object to produce visual data representing at least one scanned portion-where the at least one scanned portion includes the plurality of features. In a similar manner, the X-ray scanning device may be controlled to produce visual indicia representing a plurality of scanned portions. The at least one scanned portion comprises at least a portion of the at least one feature. The object is loaded into a CT machine that contains the X-ray scanning device, and has a fixture that does not obstruct the X-ray scanning device. The fixture is, according to the invention, movable in a variety of manners, such as in a translational direction and in a rotational direction. Moreover, the model may include a 3D CAD model. Indeed, among other things, the feature may include an internal feature or an external feature of the object. The X-ray scanning device may have a source that moves less than 360 degrees around the object when scanning the object. Among other ways, the X-ray scanning device may scan a plurality of intersecting planes of the object.

In accordance with another embodiment of the invention, an apparatus for measuring an object, the apparatus being defined in claim 8, has a registration module configured to register the object with a model of the object, and a fixture for supporting the object. The apparatus also has a controller, operatively coupled with the registration module, configured to control an X-ray scanning device to scan less than the entirety of the object to produce visual data representing at least one scanned portion. The at least one scanned portion includes at least one feature, and the scanner is controlled as a function of the registration of the object and model.

Illustrative embodiments of the invention are implemented as a computer program product having a computer usable medium with computer readable program code thereon, the computer program product being defined in claim 10. The computer readable code may be read and utilized by a computer system in accordance with conventional processes.

Accordingly, prior art computed tomography inspection systems have been used mainly for non-destructive testing purposes so that their design requires the complete acquisition of an object's entire volume since the exact location of internal features may be unknown. In today's industrial computed tomography systems, the entire object volume is scanned through a complete rotation of 360 degrees with a plurality of either 2D x-ray projection images (cone beam/flat panel scanners) or 1D X-ray scan lines (helical/line scanners). These images are later reconstructed by software into planar slices or complete volumes for analysis. One problem with this approach, when considering geometric measurement, is that often too much unwanted information is collected. Since features being measured for geometric analysis usually have known nominal locations and orientations within the object being inspected, a complete acquisition that includes all the volume between those features is unnecessary. The current computed tomography inspection systems known to the inventors act blindly to collect all of the data contiguously through the object. The collection of this superfluous data bogs down processing time, takes up extra space for data storage, and makes the application for geometric inspection of larger objects using computed tomography highly impractical.

Thus, as noted, the embodiments of the invention position an object within a computed tomography system to collect data only in the relevant regions where features of interest lie. This may be accomplished by selectively scanning cross-sectional plans that are orthogonal to those features of interest and at a minimum spacing between scan plans necessary to preserve geometry accuracy.

A nominal definition of the object or CAD model is used to fully automate the process of determining where the features of interest lie within the object to be measured-a CAD model contains all of the geometric information about the features of interest, such as their orientation and position within an object. This information may be used to strategically plan the scanning trajectories and number of projections required to effectively measure all the features of interest within an object without acquiring superfluous data and slowing down the reconstruction process. The prerequisite to using the nominal definition is that it is in-sync, i.e., registered with the object so that the position and orientations can be known. This may be accomplished by knowing only a few reference data points on the surface of the part relative to how it is being held in the positioning system's fixture. These reference points can be determined in advance by having measurements of the fixture data and stored for later reference.

### BRIEF DESCRIPTION OF THE DRAWINGS

Those skilled in the art should more fully appreciate advantages of various embodiments of the invention from the following "Description of Illustrative Embodiments," discussed with reference to the drawings summarized immediately below.
Figure 1 schematically shows and imaging system that may be configured in accordance of illustrative embodiments of the invention.
Figure 2A schematically shows top and perspective front views of an exemplary object that may be scanned in accordance with illustrative embodiments of the invention.
Figure 2B schematically shows front and side views of the object of Figure 2A.
Figure 3A schematically shows the object of Figures 2A and 2B within the imaging device and positioned on a fixture.
Figure 3B schematically shows the object of Figures 2A and 2B, but rotated for scanning along another axis.
Figure 4 schematically shows an apparatus for measuring selected portions of an object.
Figure 5 shows a process of measuring an object in accordance with illustrative of embodiments of invention.

### DESCRIPTION OF ILLUSTRATIVE EMBODIMENTS

In all illustrative embodiments, a metrology x-ray scanning device cooperates with a computer system to scan only relevant portions of a known object. To that end, the system registers the object with a model of that same object to provide system awareness of the object itself, and the feature(s) of interest. After completing the registration process, the system uses the model information to scan appropriate regions relevant to the feature(s) of interest. Details of illustrative embodiments are discussed below.

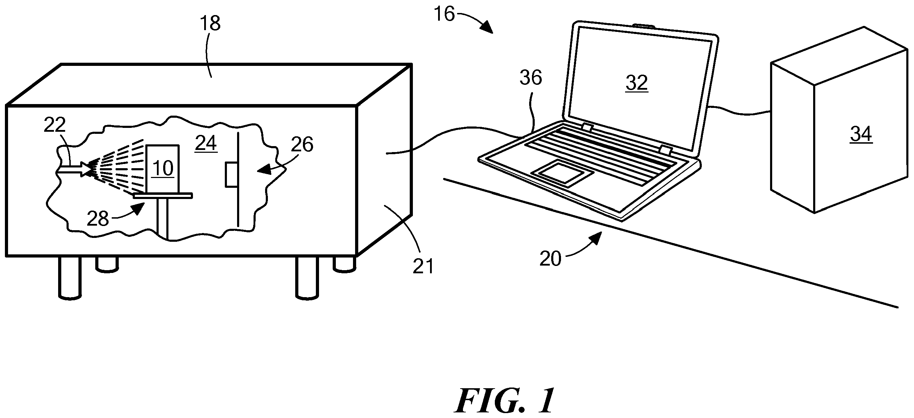

Figure 1 schematically shows a metrology imaging and measurement system 16 that can selectively image an object 10 in accordance with illustrative embodiments of the invention. As shown, the system 16 includes a computed tomography machine ("CT machine 18") coordinated and controlled by an accompanying computer system 20. The CT machine 18 is shown in a cut-away view to detail some of its interior components.

More specifically, like others in the art, the CT machine 18 in this figure has a housing that both forms an internal chamber for containing various components, and acts as a shield to x-rays. The chamber of the CT machine 18 contains an x-ray source 22 that transmits x-rays (typically) in a generally cone-shaped pattern (a/k/a "cone beam"), toward and through an object 10 within its interior region. This interior region, which contains the object 10 being imaged as it is receiving x-rays, is referred to herein as an "active region 24." As known by those skilled in the art, the object 10 attenuates the x-rays to some degree, changing the pattern of x-rays on the opposite side of the object 10. A detector 26 on the opposite side of the object 10 detects this pattern, producing a two-dimensional representation/image of the object 10.

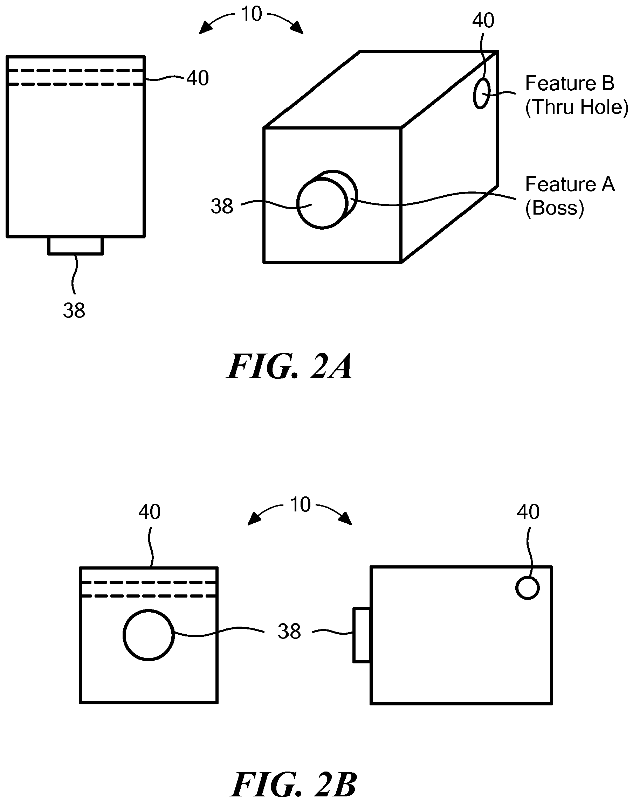

To obtain a three-dimensional representation/image, however, the system 16 moves the position of the object 10 relative to the x-ray source 22 and detector 26. Some CT machines 18 rotate the x-ray source 22 and detector 26 (referred to as "source/detector pair 22/26") while leaving the object 10 stationary. Other CT machines 18, such as that shown in Figure 2, rotate the object 10 and source/detector pair 22/26. Of course, various embodiments may use these and other arrangements. The object 10 is positioned/supported on a rotating device, such as the platter of a rotary table 28 or fixture. Among other ways, the rotary table 28 may be configured to precisely rotate the object 10 a predefined amount each time it generates a two-dimensional image (discussed below). For example, the CT machine 18 may take 500 to 2000 two-dimensional images of the object 10 on the table 28. These two-dimensional images, which typically are taken from slightly different perspectives, often are referred to in the art as "projections."

Illustrative embodiments may use any of a variety of different types of systems. For example, some embodiments may use linear detectors, while other embodiments may use flat panel detectors. Depending on the system type (e.g., linear or flat panel), projections may be in the form of line images (e.g., linear system) or plane images (e.g., flat panel system) ultimately used to reconstruct cross-sectional slices or volumes, respectively.

Conventional software techniques convert this plurality of two-dimensional images/projections into a detailed, comprehensive three-dimensional representation of the object 10. For example, the computer system 20, which has a display device 32, a CPU/memory/logic within a chassis 34 (i.e., a computer), input device 36 (e.g., a keyboard and/or mouse), and other conventional components, may execute these conventional software routines to generate a three-dimensional representation of the object 10. The computer system 20, however, also may execute other routines that improve scanning throughput.

More specifically, as noted above, all embodiments of the invention do not scan the entire object 10. Instead, the system 16 scans only relevant portions of the object 10. Figures 2A and 2B schematically show an object 10 that may be measured in accordance of illustrative embodiments. It should be noted that this object 10 is merely exemplary and not intended to limit the scope of various embodiments. Accordingly, illustrative embodiments apply to objects 10 having many different shapes, sizes, materials, etc.

In this example, the object 10 is a rectangular box having a boss 38 extending from a front face (i.e., an external feature of the object 10), and a through-hole 40 in extending through an upper portion of its width (i.e., an internal feature of the object 10). To illustrate this more clearly, Figure 2A schematically shows a front perspective view of the object 10 (on the right), and a top view of the object 10 (on the left). This top view explicitly shows the boss 38 extending from the front face, and the through-hole 40 extending across its body in phantom/dashed lines. Figure 2B shows the same object 10, with the left side showing a front view and the right side showing a side view.

The front view shows the boss 38 extending from the face and the through-hole 40 extending through the width in phantom/dashed lines. In a similar manner, the side view shows the opening to the through-hole 40, and the boss 38 extending from the front face. One thing of note is that the two features of interest, the boss 38 and the through-hole 40, diverge from one another and thus, do not have generally parallel longitudinal axes. It also should be noted that while the features of interests have longitudinal axes, some futures of other objects may be irregularly shaped, without well-defined axes, and still be capable of analysis by various embodiments of invention.

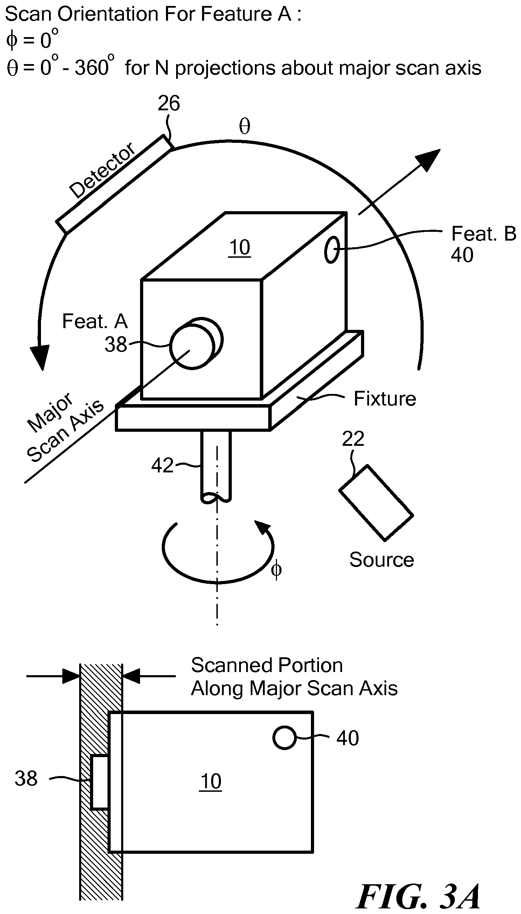

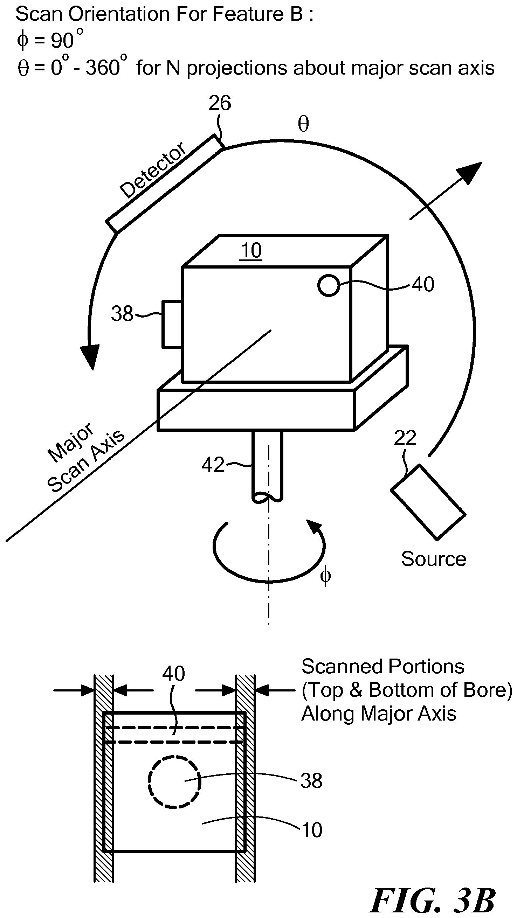

Figure 3A schematically shows the object 10 of Figures 2A and 2B within the imaging device/scanning machine 18 and oriented to scan the boss 38 feature of the object 10. In a corresponding manner, Figure 3B schematically shows the object 10 of Figures 2A and 2B, but rotated ninety degrees for scanning along another axis-to scan the through-hole 40 of the object 10.

More specifically, both figures show the object 10 on the rotary table 28 of Figure 1, and a source/detector pair 22/26 for scanning the object 10. The outer housing 21 and other features are omitted from these figures to view these components. The rotary table 28 has an axle 42 extending downwardly from its general center. Although not shown, the axle 42 terminates at a mechanism that rotates the entire rotary table 28 about an axis formed by the axle 42. Among other things, this mechanism may include a precise motor, such as a stepper motor, that is controlled by the computer for precise angular rotations. In these drawings, rotational angles are represented by the Greek letter "Ø" (phi).

In addition to rotating, the rotary table 28 can also move translationally relative to the source/detector pair 22/26 within the scanning machine 18. For example, some embodiments translationally move the rotary table 28 without moving the source/detector pair 22/26. Other embodiments, however, translationally move the source/detector pair 22/26without translationally moving the rotary table 28. Yet other embodiments may translate both the rotary table 28 and the source/detector pair 22/26. In a manner similar to conventional techniques, this relative movement is used to scan along the longitudinal axis of the feature being imaged.

While remaining stationary relative to one another (i.e., the detector and source 22), the source/detector pair 22/26 may move or orbit the object 10 along an arc identified in the drawings by the angle identified by the Greek letter theta "θ." Moreover, between scans, this arc may be rotated relative to its center by some angle to scan along other trajectories. For example, the arc may scan directly over the top of the object 10 during one set of scans, and then rotate ninety degrees relative to its center to scan over the sides (e.g., the front) during another set of scans.

As shown in Figure 3A, the angle phi Ø is designated at 0 degrees to scan the boss 38 (i.e., feature "A"), while Figure 3B rotates the rotary table 28 ninety degrees to scan the through-hole 40 (i.e., feature "B"). More specifically, in this embodiment, only a portion of the object 10 is scanned. Figure 3A illustrates this by scanning only the boss 38 and a small interior portion of the body of the object 10. Accordingly, this embodiment scans this entire feature of interest (i.e., the boss 38), and little else. Figure 3B similarly illustrates this by scanning the top and bottom portions of the through-hole 40 (e.g., the terminal portions of the through-hole 40), while not scanning the rest of the through-hole 40. Unlike the boss 38, however, the system 16 scans only a portion of the through-hole 40-not its entire length. Accordingly, this eliminates the need to acquire, process, and analyze a great deal of needless data, consequently reducing the time required to measure the object 10. These embodiments therefore should reduce measurement times to commercially reasonable standards.

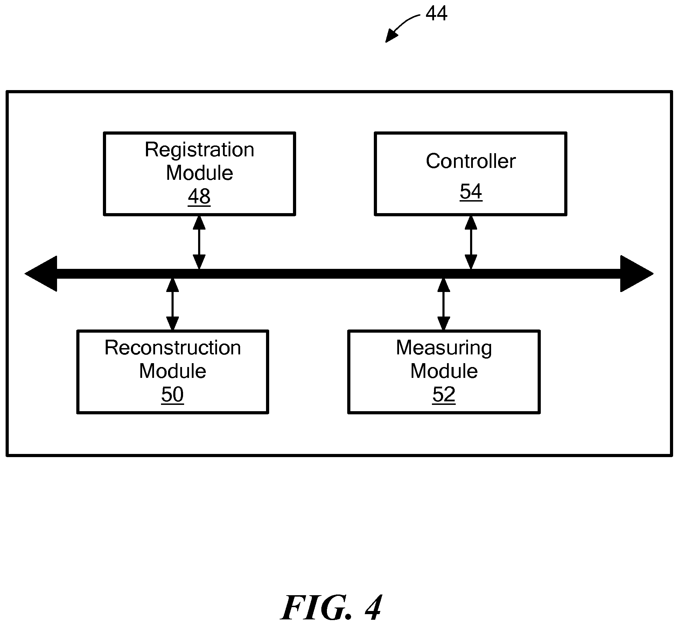

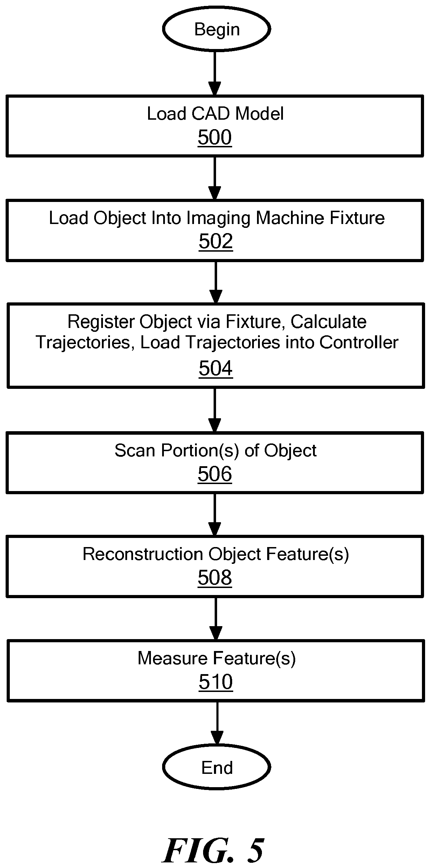

A specially configured logic apparatus 44 performs some of the requisite steps (discussed below with regard to Figure 5) to measure the selected portions of the object 10. To that end, Figure 4 schematically shows a few portions of the logic apparatus 44 in accordance with illustrative embodiments of the invention. These portions cooperate with other parts of the overall system 16 to measure relevant portions of the object 10.

In particular, the logic apparatus 44 includes a plurality of modules or subsystems that communicate by means of a conventional communication mechanism, such as a bus 46. Indeed, those skilled in the art can use other communication mechanisms, such as a wireless medium, direction connections, etc. and thus, a bus is discussed by example only. Accordingly, those skilled in the art may select any of a number of different mechanisms for operatively coupling the modules.

The modules cooperate to perform the desired functions discussed below, ultimately measure a feature or portion of the object 10. To that end, the logic apparatus 44 includes a registration module 48 configured to register the object 10 with a model of the object 10. As discussed below, among other things, the model may include a computer aided design (CAD) model or other relevant type of model known in the art. As known by those in the art, a CAD model typically has all the geometric information about the features of interest, such as their orientation and relative positions within the object 10. It is this specific information that drives various embodiments.

The logic apparatus 44 also includes a reconstruction module 50 configured to reconstruct scanned portions of the object 10 from visual data generated by the source 22 and detector 26, and a measuring module 52 configured to measure the feature/portions of the object 10 from the reconstructed object portions. A controller 54 uses the information from the other modules to control the system 16 to scan an appropriate amount of the object 10. For example, using information and instructions from the other modules, the controller 54 can direct the source 22 and detector 26 to obtain visual data of prescribed portions of the object 10.

As discussed in greater detail below, each module may be implemented by hardware, software, or a combination of hardware and software. For example, some or all of the modules may be implemented as integrated circuits on a printed circuit board, as software components executing on the computer system 20, or both.

Figure 5 shows a process of measuring selected portions of the object 10 of Figures 2A and 2B in accordance with illustrative embodiments of invention. This process preferably permits measurement of a plurality of like objects 10. For example, this process can be performed at the end of a production line to measure objects 10 (e.g., a specialized type of propeller) the production line is manufacturing. It should be noted that this process is a simplified version of what could be a much longer process. Accordingly, the process may entail additional steps that are not discussed in Figure 5. Moreover, some embodiments may perform various steps in a different order than that described. Those skilled in the art should be able to make appropriate changes to the order and number of steps in the process.

The process begins by configuring the system 16 to measure one or a plurality of like objects 10, such as that shown in Figures 2A and 2B. Specifically, the process begins at step 500, which loads the CAD model into the system 16. Accordingly, the CAD model of the object 10 is stored in some storage device associated with the system 16. This step also may receive an identification of the features of interest to measure (e.g., the boss 38 and through-hole 40 of the object 10) by referencing those features as they appear on the CAD model of the object 10. Among other ways, these features may be entered by a technician, or though some automated process.

The process thus continues to step 502, in which an operator loads the object 10 into an imaging machine 18 (e.g., a fixture in the machine 18), such as the CT scanning machine 18 shown in Figure 1. More specifically, the operator precisely positions the object 10 on the rotary table 28 in a prescribed manner, effectively registering the object 10 with the rotary table 28. This enables the system 16 to readily associate various portions of the object 10 with the rotary table 28, which enables system identification of various parts of the object 10. In illustrative embodiments, the rotary table 28 does not block relevant portions of the object 10 being measured.

The process then continues to step 504, which performs a number of configuration and calibration steps that permits the system to repeatedly measure the same type of object 10 multiple times. To that end, using the registration module 48, the process registers the object 10 (via the fixture) with a model of the object 10. Specifically, unlike clinical use of a CT scanner, it is expected that the technician/operator should know the nominal features of the object 10 through the CAD model. Using the object 10 of Figures 2A and 2B as an example, the operator and system 16 should have the knowledge that the object 10 has:
1) a rectangular shape,
2) the short boss 38 extending from its front face, and
3) the through-hole 40 extending through its width.

In fact, the operator and system 16 also should know the general dimensions of the object 10, the inner dimension of the through-hole 40, the diameter of the boss 38, as well as the general contours of the object surfaces (i.e., the planarity of its surfaces). Accordingly, using the registration information of the object 10 and the rotary table 28 (discussed below), the system 16 registers the object 10 with the CAD model. In other words, using the CAD model, the system 16 already has informational knowledge of the object 10 as it is positioned on the rotary table 28 (even if the object 10 is not yet loaded) and thus, uses the CAD model to identify nominal portions of the object 10.

This step continues by calculating efficient trajectories for the source/detector pair 22/26 to scan the object. In so doing, this step searches the nominal model for the features of interest, determines approximately where those features are located on the actual object 10, and then generates scanning trajectories to acquire visual indicia/data of the features of interest. In illustrative embodiments, step 504 loads the CAD model into a simulation program that calculates trajectories that will capture the features of interest while scanning a minimal amount of unnecessary portions of the object 10. In other words, this step calculates trajectories for minimizing the amount of data that is gathered and ultimately processed in later steps. Accordingly, this step should further reduce the time to process the object 10. After calculating the trajectories, this step loads the desired trajectories into the controller 54, which controls the movement of the source/detector pair 22/26.

At this step, the process may begin processing many different objects 10 that nominally have the characteristics of the object in the CAD model. Stated another way, the process now may measure many objects 10 intended to have the features of the CAD model. Although only one scan is discussed in the subsequent steps, those skilled in the art should understand that various steps (discussed below) can be repeated multiple times after registration is completed.

It also should be reiterated that although a CAD model is described and discussed, those skilled in the art can use other types of models. Accordingly, discussion of a CAD model is for illustrative purposes only and not intended to limit all embodiments.

The process continues to step 506, which scans the desired portions of the object 10 to produce visual indicia/data representing the object 10. Among other ways, the features to be scanned may be pre-programmed as noted above, or selected at the time of scanning using the CAD model. Accordingly, illustrative embodiments image/scan less than the entirety of an object as a function of the registration of the object 10 with the model.

To those ends, with reference to Figures 3A and 3B, the system 16 serially scans part or all of the features of interest of the object 10. The complete object 10 is not scanned-- only one or more portions of the object 10 are scanned. In the example shown, the system 16 first scans the boss 38 as shown in Figure 3A (feature A), and then scans the through-hole 40 as shown in Figure 3B (feature B). To scan the boss 38, the rotary table 28 is rotated to an orientation that enables the source/detector pair 22/26 to scan a prescribed amount along the longitudinal axis of the boss 38. In this case, as shown in Figure 3A, the system 16 only scans a small portion of the object 10.

Continuing with step 506, the process then rotates the rotary table 28 ninety 90 degrees, and then scans a first prescribed portion of the through-hole 40 and stops scanning. This is shown in the lower picture of Figure 3B. While continuing along the longitudinal axis, the system 16 then begins scanning at a prescribed point near the end of the through-hole 40, and completes scanning just after the end of the object 10/through-hole 40.

It should be noted that the source/detector pair 22/26 does not necessarily complete a full orbit around the object 10. Some embodiments rotate less than 360 degrees around the object 10 since the entire 360 degrees of information may be unnecessary (in some uses). The operator and/or system 16 may determine an appropriate amount of rotation. Moreover, the source/detector pair 22/26 may make multiple scans that are either parallel to each other, or intersecting each other. This was suggested above when discussing how the source/detector pair 22/26 may rotate its arc between scans. It thus is not necessary that all scans be parallel.

After scanning the appropriate portion or portions of the object 10, the reconstruction module 50 reconstructs the object 10 using conventional reconstruction processes known in the CT art (step 508). The system 16 may display the reconstructed object 10 on the display device 32, store it in memory, or both. The process concludes at step 510, in which the measuring module 52 measures the desired features of interest of the reconstructed object 10.

Accordingly, illustrative embodiments image or scan only portions of the object 10 that are necessary to obtain an accurate measure of the feature of interest, significantly reducing measurement times. This advance should enable a more facile, effective industrial inspection process.

Various embodiments of the invention may be implemented at least in part in any conventional computer programming language. For example, some embodiments may be implemented in a procedural programming language (e.g., "C"), or in an object oriented programming language (e.g., "C++"). Other embodiments of the invention may be implemented as preprogrammed hardware elements (e.g., application specific integrated circuits, FPGAs, and digital signal processors), or other related components.

The disclosed apparatus and methods (e.g., see the various flow charts described above) may be implemented at least in part as a computer program product for use with a computer system. Such implementation may include a series of computer instructions fixed either on a tangible medium, such as a computer readable medium (e.g., a diskette, CD-ROM, ROM, or fixed disk). The series of computer instructions can embody all or part of the functionality previously described herein with respect to the system.

Those skilled in the art should appreciate that such computer instructions can be written in a number of programming languages for use with many computer architectures or operating systems. Furthermore, such instructions may be stored in any memory device, such as semiconductor, magnetic, optical or other memory devices, and may be transmitted using any communications technology, such as optical, infrared, microwave, or other transmission technologies.

Among other ways, such a computer program product may be distributed as a removable medium with accompanying printed or electronic documentation (e.g., shrink wrapped software), preloaded with a computer system (e.g., on system ROM or fixed disk), or distributed from a server or other remove device over the network (e.g., the Internet or World Wide Web). Of course, some embodiments of the invention may be implemented as a combination of both software (e.g., a computer program product) and hardware. Still other embodiments of the invention are implemented as entirely hardware, or entirely software.

Although the above discussion discloses various exemplary embodiments of the invention, it should be apparent that those skilled in the art can make various modifications that will achieve some of the advantages of the invention without departing from the true scope of the invention as defined in the appended claims.

## Claims

1. A method of measuring an object (10) positioned on a rotary table (28), the method comprising:
registering the object (10) with a nominal model, in particular comprising a 3D CAD model, of the object, the object having a plurality of features (38, 40);
determining at least one feature of the object to scan;
controlling an X-ray scanning device comprising a source/detector pair (22, 26) to scan (506) less than the entire object to produce visual data representing at least one scanned portion, the at least one scanned portion including at least a portion of the at least one feature, controlling being a function of registering the object with the model, wherein the rotary table (28) is moved in a rotational direction and, to scan along the longitudinal axis of the at least one feature, the rotary table (28) is moved in a translational direction relative to the source/detector pair (22, 26), wherein
the rotary table (28) is moved without moving the source/detector pair (22, 26), or
the source/detector pair (22, 26) is moved without translationally moving the rotary table (28), or
both the rotary table (28) and the source/detector pair (22, 26) are translated;
volumetrically reconstructing (508) the at least one scanned portion of the registered object from the visual data, reconstructing producing a volumetric reconstruction; and
measuring (510) the at least one feature from the volumetric reconstruction.

2. The method as defined by claim 1, wherein determining comprises determining a plurality of features of the object to scan, controlling comprising controlling the X-ray scanning device to scan less than the entirety of the object to produce visual data representing at least one scanned portion, the at least one scanned portion including the plurality of features.

3. The method as defined by claim 2,wherein controlling comprises controlling the X-ray scanning device to produce visual indicia representing a plurality of scanned portions.

4. The method as defined by one of claims 1 to 3, further comprising loading (502) the object into a CT machine (18) comprising the X-ray scanning device and the rotary table (28).

5. The method as defined by one of claims 1 to 4, wherein the method is further **characterized by** at least one of the following:
the feature includes an internal feature of the object;
the feature includes an external feature of the object;
the X-ray scanning device comprises a source that moves less than 360 degrees around the object when scanning the object; and
the rotary table (28) is a fixture that does not obstruct the X-ray scanning device.

6. The method as defined by one of claims 1 to 5, wherein controlling comprises controlling an X-ray scanning device to scan a plurality of planes of the object, at least two of the planes intersecting.

7. The method as defined by one of claims 1 to 6, wherein the X-ray scanning device comprises a linear detector or comprises a flat panel detector.

8. An apparatus for measuring an object, the apparatus comprising:
a registration module configured to register the object with a nominal model, in particular comprising a 3D CAD model, of the object, the object having a plurality of features;
a fixture configured to support the object, wherein the fixture is a rotary table (28);
an X-ray scanning device comprising a source/detector pair (22, 26);
a controller operatively coupled with the registration module, the controller being configured to control the X-ray scanning device to scan (506) less than the entire object to produce visual data representing at least one scanned portion, the at least one scanned portion including at least a portion of at least one feature, controlling being a function of registering the object and the model, wherein the rotary table (28) is moved in a rotational direction and, to scan along the longitudinal axis of the at least one feature, the rotary table (28) is moved in a translational direction relative to the source/detector pair (22, 26), wherein
the rotary table (28) is moved without moving the source/detector pair (22, 26), or
the source/detector pair (22, 26) is moved without translationally moving the rotary table (28), or
both the rotary table (28) and the source/detector pair (22, 26) are translated;
a reconstruction module operatively coupled with the controller, the reconstruction module being configured to reconstruct the at least one scanned portion of the object from the visual data to produce a volumetric reconstruction; and
a measuring module operatively coupled with the reconstruction module, the measuring module being configured to measure (510) the at least one feature from the volumetric reconstruction.

9. The apparatus as defined by claim 8, further comprising a housing forming a chamber containing the fixture and the X-ray scanning device.

10. A computer program product for use on a computer system of an apparatus according to claim 8 for measuring
an object (10) positioned on the rotary table (28), the computer program product comprising a tangible, non-transient computer usable medium having computer reable program code thereon, the computer readable program code comprising:
program code for registering the object (10) with a nominal model, in particular comprising a 3D CAD model, of the object, the object having a plurality of features (38, 40);
program code for determining at least one feature of the object to scan; and
program code for controlling the X-ray scanning device comprising a source/detector pair (22, 26) to scan (506) less than the entire object to produce visual data representing at least one scanned portion, the at least one scanned portion including at least a portion of the at least one feature, the controlling being a function of registering the object and the model, wherein the rotary table (28) is moved in a rotational direction and, to scan along the longitudinal axis of the at least one feature, the rotary table (28) is moved in a translational direction relative to the source/detector pair (22, 26), wherein
the rotary table (28) is moved without moving the source/detector pair (22, 26), or
the source/detector pair (22, 26) is moved without translationally moving the rotary table (28), or
both the rotary table (28) and the source/detector pair (22, 26) are translated;
program code for volumetrically reconstructing (508) the at least one scanned portion of the registered object from the visual data, reconstructing producing a volumetric reconstruction; and
program code for measuring (510) the at least one feature from the volumetric reconstruction.

11. The computer program product as defined by claim 10, wherein the program code for determining comprises program code for determining a plurality of features of the object to scan, the program code for controlling comprising program code for controlling the X-ray scanning device to scan less than the entirety of the object to produce visual data representing at least one scanned portion, the at least one scanned portion including the plurality of features.

12. The computer program product as defined by claim 11, wherein the program code for controlling comprises program code for controlling the X-ray scanning device to produce visual indicia representing a plurality of scanned portions.

13. The computer program product as defined by one of claims 10 to 12, wherein the computer program product further comprises program code for loading (502) the object into a CT machine (18) comprising the X-ray scanning device and the rotary table (28).

14. The computer program product as defined by one of claims 10 to 13, wherein the feature includes an internal feature of the object.

15. The computer program product as defined by one of claims 10 to 14, wherein the feature includes an external feature of the object.

## Patentansprüche

1. Verfahren zur Messung eines Objekts (10), das auf einem Drehtisch (28) positioniert ist, wobei das Verfahren Folgendes umfasst:
Registrieren des Objekts (10) mit einem nominalen Modell des Objekts, das insbesondere ein 3D-CAD-Modell umfasst, wobei das Objekt eine Vielzahl von Merkmalen (38, 40) aufweist;
Bestimmen von mindestens einem Merkmal des abzutastenden Objekts;
Steuern einer Röntgen-Abtasteinrichtung, die ein Quellen-/Detektor-Paar (22, 26) umfasst, zum Abtasten (506) von weniger als dem gesamten Objekt, um visuelle Daten zu erzeugen, die mindestens einen abgetasteten Abschnitt darstellen, wobei der mindestens eine abgetastete Abschnitt mindestens einen Abschnitt des mindestens einen Merkmals beinhaltet, wobei das Steuern von dem Registrieren des Objekts mit dem Modell abhängig ist, wobei der Drehtisch (28) in einer Drehrichtung bewegt wird, und zum Abtasten entlang der Längsachse des mindestens einen Merkmals der Drehtisch (28) in einer Translationsrichtung relativ zu dem Quellen-/Detektor-Paar (22, 26) bewegt wird, wobei
der Drehtisch (28) bewegt wird, ohne das Quellen-/Detektor-Paar (22, 26) zu bewegen, oder
das Quellen-/Detektor-Paar (22, 26) bewegt wird, ohne den Drehtisch (28) translatorisch zu bewegen, oder
sowohl der Drehtisch (28) als auch das Quellen-/Detektor-Paar (22, 26) verlagert werden;
volumetrisches Rekonstruieren (508) des mindestens einen abgetasteten Abschnitts des registrierten Objekts anhand der visuellen Daten, wobei das Rekonstruieren eine volumetrische Rekonstruktion erzeugt; und
Messen (510) des mindestens einen Merkmals anhand der volumetrischen Rekonstruktion.

2. Verfahren nach Anspruch 1, wobei das Bestimmen ein Bestimmen einer Vielzahl von Merkmalen des abzutastenden Objekts umfasst, wobei das Steuern ein Steuern der Röntgen-Abtasteinrichtung umfasst, um weniger als die Gesamtheit des Objekts abzutasten, um visuelle Daten zu erzeugen, die mindestens einen abgetasteten Abschnitt darstellen, wobei der mindestens eine abgetastete Abschnitt die Vielzahl von Merkmalen beinhaltet.

3. Verfahren nach Anspruch 2, wobei das Steuern ein Steuern der Röntgen-Abtasteinrichtung umfasst, um visuelle Kennzeichen zu erzeugen, die eine Vielzahl von abgetasteten Abschnitten darstellen.

4. Verfahren nach einem der Ansprüche 1 bis 3, das ferner ein Laden (502) des Objekts in eine CT-Maschine (18) umfasst, die die Röntgen-Abtasteinrichtung und den Drehtisch (28) umfasst.

5. Verfahren nach einem der Ansprüche 1 bis 4, wobei das Verfahren ferner durch eines der Folgenden gekennzeichnet ist:
das Merkmal beinhaltet ein inneres Merkmal des Objekts;
das Merkmal beinhaltet ein äußeres Merkmal des Objekts;
die Röntgen-Abtasteinrichtung umfasst eine Quelle, die sich um weniger als 360 Grad um das Objekt bewegt, wenn das Objekt abgetastet wird; und
der Drehtisch (28) ist eine Haltevorrichtung, die die Röntgen-Abtasteinrichtung nicht behindert.

6. Verfahren nach einem der Ansprüche 1 bis 5, wobei das Steuern ein Steuern einer Röntgen-Abtasteinrichtung umfasst, um eine Vielzahl von Ebenen des Objekts abzutasten, wobei sich mindestens zwei der Ebenen schneiden.

7. Verfahren nach einem der Ansprüche 1 bis 6, wobei die Röntgen-Abtasteinrichtung einen linearen Detektor umfasst oder einen Flachbilddetektor umfasst.

8. Vorrichtung zur Messung eines Objekts, wobei die Vorrichtung Folgendes umfasst:
ein Registrierungsmodul, das dazu konfiguriert ist, das Objekt mit einem nominalen Modell des Objekts zu registrieren, das insbesondere ein 3D-CAD-Modell umfasst, wobei das Objekt eine Vielzahl von Merkmalen aufweist;
eine Haltevorrichtung, die dazu konfiguriert ist, das Objekt zu tragen, wobei es sich bei der Haltevorrichtung um einen Drehtisch (28) handelt;
eine Röntgen-Abtasteinrichtung, die ein Quellen-/Detektor-Paar (22, 26) umfasst,
eine Steuerung, die mit dem Registrierungsmodul wirkverbunden ist, wobei die Steuerung dazu konfiguriert ist, die Röntgen-Abtasteinrichtung zum Abtasten (506) von weniger als dem gesamten Objekt zu steuern, um visuelle Daten zu erzeugen, die mindestens einen abgetasteten Abschnitt darstellen, wobei der mindestens eine abgetastete Abschnitt mindestens einen Abschnitt von mindestens einem Merkmal beinhaltet, wobei das Steuern von dem Registrieren des Objekts und dem Modell abhängig ist, wobei der Drehtisch (28) in einer Drehrichtung bewegt wird und, zum Abtasten entlang der Längsachse des mindestens einen Merkmals, der Drehtisch (28) in einer Translationsrichtung relativ zu dem Quellen-/Detektor-Paar (22, 26) bewegt wird, wobei
der Drehtisch (28) bewegt wird, ohne das Quellen-/Detektor-Paar (22, 26) zu bewegen, oder
das Quellen-/Detektor-Paar (22, 26) bewegt wird, ohne den Drehtisch (28) translatorisch zu bewegen, oder
sowohl der Drehtisch (28) als auch das Quellen-/Detektor-Paar (22, 26) verlagert werden;
ein Rekonstruktionsmodul, das mit der Steuerung wirkverbunden ist, wobei das Rekonstruktionsmodul dazu konfiguriert ist, den mindestens einen abgetasteten Abschnitt des Objekts anhand der visuellen Daten zu rekonstruieren, um eine volumetrische Rekonstruktion zu erzeugen, und
ein Messmodul, das mit dem Rekonstruktionsmodul wirkverbunden ist, wobei das Messmodul dazu konfiguriert ist, das mindestens eine Merkmal anhand der volumetrischen Rekonstruktion zu messen (510).

9. Vorrichtung nach Anspruch 8, die ferner ein Gehäuse umfasst, das eine Kammer bildet, die die Haltevorrichtung und die Röntgen-Abtasteinrichtung enthält.

10. Computerprogrammprodukt zur Verwendung an einem Computersystem einer Vorrichtung nach Anspruch 8 zur Messung eines Objekts (10), das auf dem Drehtisch (28) positioniert ist, wobei das Computerprogrammprodukt ein materielles, nichttransientes vom Computer verwendbares Medium umfasst, auf dem sich vom Computer lesbarer Programmcode befindet, wobei der vom Computer lesbare Programmcode Folgendes umfasst:
Programmcode zum Registrieren des Objekts (10) mit einem nominalen Modell des Objekts, das insbesondere ein 3D-CAD-Modell umfasst, wobei das Objekt eine Vielzahl von Merkmalen (38, 40) aufweist;
Programmcode zum Bestimmen von mindestens einem Merkmal des abzutastenden Objekts; und
Programmcode zum Steuern der Röntgen-Abtasteinrichtung, die ein Quellen-/Detektor-Paar (22, 26) zum Abtasten (506) von weniger als dem gesamte Objekt umfasst, um visuelle Daten zu erzeugen, die mindestens einen abgetasteten Abschnitt darstellen, wobei der mindestens eine abgetastete Abschnitt mindestens einen Abschnitt des mindestens einen Merkmals beinhaltet, wobei das Steuern von dem Registrieren des Objekts und dem Modell abhängig ist, wobei der Drehtisch (28) in einer Drehrichtung bewegt wird und, zum Abtasten entlang der Längsachse des mindestens einen Merkmals, der Drehtisch (28) in einer Translationsrichtung relativ zu dem Quellen-/Detektor-Paar (22, 26) bewegt wird, wobei
der Drehtisch (28) bewegt wird, ohne das Quellen-/Detektor-Paar (22, 26) zu bewegen, oder
das Quellen-/Detektor-Paar (22, 26) bewegt wird, ohne den Drehtisch (28) translatorisch zu bewegen, oder
sowohl der Drehtisch (28) als auch das Quellen-/Detektor-Paar (22, 26) verlagert werden;
Programmcode zum volumetrischen Rekonstruieren (508) des mindestens einen abgetasteten Abschnitts des registrierten Objekts anhand der visuellen Daten, wobei das Rekonstruieren eine volumetrische Rekonstruktion erzeugt; und
Programmcode zum Messen (510) des mindestens einen Merkmals anhand der volumetrischen Rekonstruktion.

11. Computerprogrammprodukt nach Anspruch 10, wobei der Programmcode zum Bestimmen Programmcode zum Bestimmen einer Vielzahl von Merkmalen des abzutastenden Objekts umfasst, wobei der Programmcode zum Steuern Programmcode zum Steuern der Röntgen-Abtasteinrichtung zum Abtasten von weniger als der Gesamtheit des Objekts umfasst, um visuelle Daten zu erzeugen, die mindestens einen abgetasteten Abschnitt darstellen, wobei der mindestens eine abgetastete Abschnitt die Vielzahl von Merkmalen beinhaltet.

12. Computerprogrammprodukt nach Anspruch 11, wobei der Programmcode zum Steuern Programmcode zum Steuern der Röntgen-Abtasteinrichtung umfasst, um visuelle Kennzeichen zu erzeugen, die eine Vielzahl von abgetasteten Abschnitten darstellen.

13. Computerprogrammprodukt nach einem der Ansprüche 10 bis 12, wobei das Computerprogrammprodukt ferner Programmcode zum Laden (502) des Objekts in eine CT-Maschine (18) umfasst, die die Röntgen-Abtasteinrichtung und den Drehtisch (28) umfasst.

14. Computerprogrammprodukt nach einem der Ansprüche 10 bis 13, wobei das Merkmal ein inneres Merkmal des Objekts beinhaltet.

15. Computerprogrammprodukt nach einem der Ansprüche 10 bis 14, wobei das Merkmal ein äußeres Merkmal des Objekts beinhaltet.

## Revendications

1. Procédé de mesure d'un objet (10) positionné sur une table rotative (28), le procédé comprenant :
le calage de l'objet (10) avec un modèle nominal, comprenant en particulier un modèle CAD 3D, de l'objet, l'objet ayant une pluralité de particularités (38, 40) ;
la détermination d'au moins une particularité de l'objet à balayer ;
la commande d'un dispositif de balayage à rayons X comprenant une paire source/détecteur (22, 26) pour balayer (506) une partie moindre de l'objet entier pour produire des données visuelles représentant au moins une portion balayée, l'au moins une portion balayée comportant au moins une portion de l'au moins une particularité, la commande étant fonction du calage de l'objet avec le modèle, dans lequel la table rotative (28) est déplacée dans une direction de rotation et, pour balayer le long l'axe longitudinal de l'au moins une particularité, la table rotative (28) est déplacée dans une direction de translation par rapport à la paire source/détecteur (22, 26), dans lequel
la table rotative (28) est déplacée sans déplacer la paire source/détecteur (22, 26), ou
la paire source/détecteur (22, 26) est déplacée sans déplacer en translation la table rotative (28), ou
la table rotative (28) et la paire source/détecteur (22, 26) sont toutes deux translatées ;
la reconstruction volumétrique (508) de l'au moins une portion balayée de l'objet calé à partir des données visuelles, la reconstruction produisant une reconstruction volumétrique ; et
la mesure (510) de l'au moins une particularité à partir de la reconstruction volumétrique.

2. Procédé selon la revendication 1, dans lequel la détermination comprend la détermination d'une pluralité de particularités de l'objet à balayer, la commande comprenant la commande du dispositif de balayage à rayons X pour balayer moins de la totalité de l'objet pour produire des données visuelles représentant au moins une portion balayée, l'au moins une portion balayée comportant la pluralité de particularités.

3. Procédé selon la revendication 2, dans lequel la commande comprend la commande du dispositif de balayage à rayons X pour produire des signes distinctifs visuels représentant une pluralité de portions balayées.

4. Procédé selon l'une des revendications 1 à 3, comprenant en outre le chargement (502) de l'objet dans une machine CT (18) comprenant le dispositif de balayage à rayons X et la table rotative (28).

5. Procédé selon l'une des revendications 1 à 4, le procédé étant en outre **caractérisé par** au moins un des éléments suivants :
la particularité comporte une particularité interne de l'objet ;
la particularité comporte une particularité externe de l'objet ;
le dispositif de balayage à rayons X comprend une source qui se déplace de moins de 360 degrés autour de l'objet lors du balayage de l'objet ; et
la table rotative (28) est un bâti qui n'obstrue pas le dispositif de balayage à rayons X.

6. Procédé selon l'une des revendications 1 à 5, dans lequel la commande comprend la commande d'un dispositif de balayage à rayons X pour balayer une pluralité de plans de l'objet, au moins deux des plans étant en intersection.

7. Procédé selon l'une des revendications 1 à 6, dans lequel le dispositif de balayage à rayons X comprend détecteur linéaire ou comprend un détecteur de panneau plat.

8. Appareil de mesure d'un objet, l'appareil comprenant :
un module de calage configuré pour caler l'objet avec un modèle nominal, comprenant en particulier un modèle CAD 3D, de l'objet, l'objet ayant une pluralité de particularités ;
un bâti configuré pour supporter l'objet, dans lequel le bâti est une table rotative (28) ;
un dispositif de balayage à rayons X comprenant une paire source/détecteur (22, 26) ; un dispositif de commande couplé opérationnellement au module de calage, le dispositif de commande étant configuré pour commander le dispositif de balayage à rayons X pour balayer (506) une partie moindre de l'objet entier pour produire des données visuelles représentant au moins une portion balayée, l'au moins une portion balayée comportant au moins une portion d'au moins une particularité, la commande étant fonction du calage de l'objet avec le modèle, dans lequel la table rotative (28) est déplacée dans une direction de rotation et, pour balayer le long de l'axe longitudinal de l'au moins une particularité, la table rotative (28) est déplacée dans une direction de translation par rapport à la paire source/détecteur (22, 26), dans lequel
la table rotative (28) est déplacée sans déplacer la paire source/détecteur (22, 26), ou
la paire source/détecteur (22, 26) est déplacée sans déplacer en translation la table rotative (28), ou
la table rotative (28) et la paire source/détecteur (22, 26) sont toutes deux translatées ;
un module de reconstruction couplé opérationnellement au dispositif de commande, le module de reconstruction étant configuré pour reconstruire l'au moins une portion balayée de l'objet à partir des données visuelles pour produire une reconstruction volumétrique ; et
un module de mesure couplé opérationnellement au module de reconstruction, le module de mesure étant configuré pour mesurer (510) l'au moins une particularité à partir de la reconstruction volumétrique.

9. Appareil selon la revendication 8, comprenant en outre un boîtier formant une chambre contenant le bâti et le dispositif de balayage à rayons X.

10. Produit-programme d'ordinateur à utiliser sur un système d'ordinateur d'un appareil selon la revendication 8 pour mesurer un objet (10) positionné sur la table rotative (28), le produit-programme d'ordinateur comprenant un support utilisable par ordinateur, non transitoire tangible sur lequel est stocké un code de programme lisible par ordinateur, le code de programme lisible par ordinateur comprenant :
un code de programme pour le calage de l'objet (10) avec un modèle nominal, comprenant en particulier un modèle CAD 3D, de l'objet, l'objet ayant une pluralité de particularités (38, 40) ;
un code de programme pour la détermination d'au moins une particularité de l'objet à balayer ; et
un code de programme pour la commande du dispositif de balayage à rayons X comprenant une paire source/détecteur (22, 26) pour balayer (506) une partie moindre de l'objet entier pour produire des données visuelles représentant au moins une portion balayée, l'au moins une portion balayée comportant au moins une portion de l'au moins une particularité, la commande étant fonction du calage de l'objet avec le modèle, dans lequel la table rotative (28) est déplacée dans une direction de rotation et, pour balayer le long de l'axe longitudinal de l'au moins une particularité, la table rotative (28) est déplacée dans une direction de translation par rapport à la paire source/détecteur (22, 26), dans lequel
la table rotative (28) est déplacée sans déplacer la paire source/détecteur (22, 26), ou
la paire source/détecteur (22, 26) est déplacée sans déplacer en translation la table rotative (28), ou
la table rotative (28) et la paire source/détecteur (22, 26) sont toutes deux translatées ;
un code de programme pour la reconstruction volumétrique (508) de l'au moins une portion balayée de l'objet calé à partir des données visuelles, la reconstruction produisant une reconstruction volumétrique ; et
un code de programme pour la mesure (510) de l'au moins une particularité à partir de la reconstruction volumétrique.

11. Produit-programme d'ordinateur selon la revendication 10, dans lequel le code de programme pour la détermination comprend un code de programme pour la détermination d'une pluralité de particularités de l'objet à balayer, le code de programme pour la commande comprenant un code de programme pour la commande du dispositif de balayage à rayons X pour balayer moins de la totalité de l'objet pour produire des données visuelles représentant au moins une portion balayée, l'au moins une portion balayée comportant la pluralité de particularités.

12. Produit-programme d'ordinateur selon la revendication 11, dans lequel le code de programme pour la commande comprend un code de programme pour la commande du dispositif de balayage à rayons X pour produire des signes distinctifs visuels représentant une pluralité de portions balayées.

13. Produit-programme d'ordinateur selon l'une des revendications 10 à 12, le produit-programme d'ordinateur comprenant en outre un code de programme pour le chargement (500) de l'objet dans une machine CT (18) comprenant le dispositif de balayage à rayons X et la table rotative (28).

14. Produit-programme d'ordinateur selon l'une des revendications 10 à 13, dans lequel la particularité comporte une particularité interne de l'objet.

15. Produit-programme d'ordinateur selon l'une des revendications 10 à 14, dans lequel la particularité comporte une particularité externe de l'objet.
